# EUROPEAN PATENT SPECIFICATION

(11) **EP 2 947 651 B1**
(45) Date of publication and mention of the grant of the patent: **12.04.2017**
(21) Application number: 13871591.7
(22) Date of filing: 03.12.2013
(51) Int. Cl.: G10L 15/22, G10L 15/28, A47L 9/28, G10L 15/20, A47L 11/40

(54) **VACUUM CLEANER**
STAUBSAUGER
ASPIRATEUR

(30) Priority: 16.01.2013 JP 2013005065
(43) Date of publication of application: 25.11.2015
(73) Proprietor: Sharp Kabushiki Kaisha, Osaka-shi, Osaka 545-8522 (JP)
(72) Inventor: YASUDA, Kazunori, Osaka-shi, Osaka 545-8522 (JP); YATAKE, Mami, Osaka-shi, Osaka 545-8522 (JP); MIKI, Kazuhiro, Osaka-shi, Osaka 545-8522 (JP)
(74) Representative: Treeby, Philip David William
(86) International application number: PCT/JP2013/082441
(87) International publication number: WO 2014/112226

(56) References cited:
- JP-A- H03 248 199
- JP-A- H03 248 199
- JP-A- H11 143 488
- JP-A- 2000 135 186
- JP-A- 2001 175 276
- JP-A- 2003 079 552
- JP-A- 2006 205 497
- JP-A- 2008 009 153
- JP-A- 2008 233 305
- JP-A- 2008 233 305
- JP-A- 2010 055 044

## Description

### Technical Field

The present invention relates to an electronic apparatus etc. In particular, the present invention relates to an electronic apparatus etc. including a speech recognition section.

### Background Art

Conventionally, operational buttons, remote controllers, and the like have been used as user interfaces via which instructions for operations are inputted to electronic apparatuses. Recently, there have been developed electronic apparatuses each including a speech recognition section via which instructions are inputted based on user's speeches.

In a case where an instruction is inputted via the speech recognition section, there is a possibility that an electronic apparatus misrecognizes a user's speech. In a case where the electronic apparatus misrecognizes the user's speech, the electronic apparatus operates in accordance with a result of misrecognition and may consequently malfunction. In order to deal with this, there has been developed a technique for preventing misrecognition in an electronic apparatus including a speech recognition section. For example, Patent Literature 1 describes a speech recognition device which asks back to a user in a case where the speech recognition device cannot successfully recognize a user's speech.

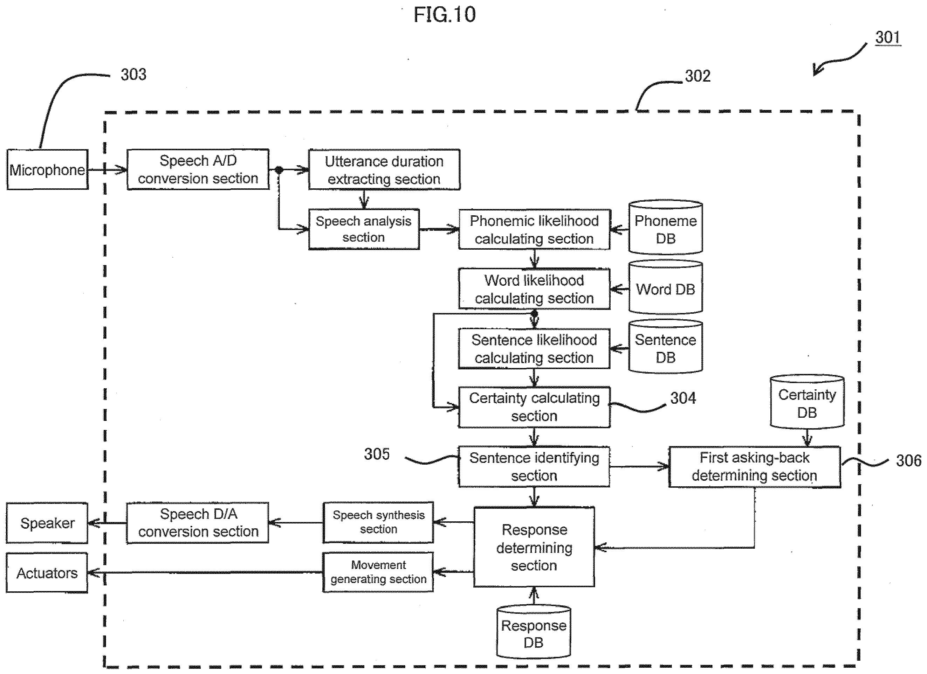

Fig. 10 is a block diagram illustrating a main configuration of a controller 302 included in a speech recognition device 301 described in Patent Literature 1. The speech recognition device 301 includes a microphone 303 via which a speech is inputted, a certainty calculating section 304 for calculating a certainty of a word recognized in the speech, a sentence identifying section 305 for identifying a sentence spoken by a speaking person, in accordance with the certainty of the word which certainty has been calculated by the certainty calculating section 304, and a first asking-back determining section 306 for determining whether or not it is necessary to ask back to the speaking person, in accordance with the certainty of the word included in thus identified sentence. In a case where the certainty of the word is not less than a predetermined threshold, the first asking-back determining section 306 determines that it is unnecessary to ask back to the speaking person. Meanwhile, in a case where the certainty of the word is less than the predetermined threshold, the first asking-back determining section 306 determines that it is necessary to ask back to the speaking person and thereby urge the person to speak more clearly. Citation List

### [Patent Literatures]

### [Patent Literature 1]

Japanese Patent Application Publication, Tokukai, No. 2008-52178 (published on March 6, 2008)

Documents found in European Search Report:
JP 2008 233305, 2 October 2008
JP H03 248199, 6 November 1991
JP 2006 205497, 10 August 2006
JP 2001 175276, 29 June 2001

### Summary of Invention

### Technical Problem

However, the speech recognition device 301 described in Patent Literature 1 always asks back to a user in some way in a case where a certainty of a word is less than the predetermined threshold. Accordingly, when the speech recognition device 301 is used at a noisy place, there is a possibility that, even if the user did not speak anything in reality, the speech recognition device 301 asks back to the user in response to a noise other than a user's speech. In such a case, the user may consider such an unnecessary asking-back response troublesome, and consequently the user may consider the speech recognition function unreliable.

The present invention is attained in view of the foregoing problem. An object of the present invention is to provide an electronic apparatus etc. capable of appropriately asking back to a user in speech recognition in which a user's speech is to be recognized.

### Solution to Problem

According to the present invention there is provided a cleaner comprising: a speech input section for converting an inputted speech to speech data; a speech recognition section for analyzing the speech data so as to (i) identify a word or sentence included in the speech data and (ii) calculate a certainty of the word or sentence that has been identified; a response determining section for determining, in accordance with the certainty, whether it is necessary to ask back to a user or not; an asking-back section for asking back to the user, (a) in a case where the certainty is less than a first threshold and not less than a second threshold, the response determining section determining that the cleaner is going to ask back to the user, and (b) in a case where the certainty is less than the second threshold, the response determining section determining that the cleaner is not going to ask back to the user; and at least one of a self-propelling section with which the cleaner propels itself, an air-blowing section for sucking dust, and a cleaning brush section for brushing and cleaning a floor, wherein the response determining section changes the second threshold while at least one of the self-propelling section, the air-blowing section, the cleaning brush section is being driven.

### Advantageous Effects of Invention

The present invention can provide an electronic apparatus etc. capable of appropriately asking back to a user in speech recognition in which a user's speech is to be recognized.

### Brief Description of Drawings

Fig. 1 is a perspective view illustrating an electronic apparatus in accordance with First Embodiment of the present invention.
Fig. 2 is a bottom view illustrating the electronic apparatus in accordance with First Embodiment of the present invention.
Fig. 3 is a block diagram illustrating a main configuration of the electronic apparatus in accordance with First Embodiment of the present invention.
Fig. 4 is a flowchart illustrating a flow of a process of speech recognition performed by the electronic apparatus in accordance with First Embodiment of the present invention.
Fig. 5 is a schematic view illustrating a specific example of how the electronic apparatus in accordance with First Embodiment of the present invention asks back to a user.
Fig. 6 is a flowchart illustrating a flow of a process of speech recognition performed by an electronic apparatus in accordance with Second Embodiment of the present invention.
Fig. 7 is a schematic view illustrating a specific example of how the electronic apparatus in accordance with Second Embodiment of the present invention asks back to a user.
Fig. 8 is a block diagram illustrating main configurations of an electronic apparatus in accordance with Third Embodiment of the present invention and an external device.
Fig. 9 is a flowchart illustrating a flow of a process of speech recognition performed by the electronic apparatus in accordance with Third Embodiment of the present invention.
Fig. 10 is a block diagram illustrating a main configuration of a controller included in a speech recognition device described in Patent Literature 1.

### Description of Embodiments

### [First Embodiment]

The following discusses an electronic apparatus in accordance with First Embodiment of the present invention.

The electronic apparatus in accordance with First Embodiment is a cleaner which (i) includes (a) a running section and (b) an air-blowing section, (ii) (a) propels itself on a floor with use of the running section and (b) at the same time, performs cleaning by sucking dust on the floor with use of an air flow generated by the air-blowing section.

Further, the electronic apparatus in accordance with First Embodiment includes a speech recognition section. The electronic apparatus recognizes a user's speech, and makes various responses in accordance with an instruction included in the speech. For example, in a case where the user's speech includes "do the cleaning", the electronic apparatus controls the running section and the air-blowing section so as to perform a predetermined cleaning operation.

In a case where the electronic apparatus in accordance with First Embodiment determines that it is necessary to ask back to a user in speech recognition in which a user's speech is to be recognized, the electronic apparatus asks back to the user. Asking back to a user indicates urging a user to utter a previously uttered speech again. Such asking back is made with, for example, a speech and/or a movement.

With reference to the drawings, the following discusses a specific structure of the electronic apparatus in accordance with First Embodiment.

### (Structure of electronic apparatus 1)

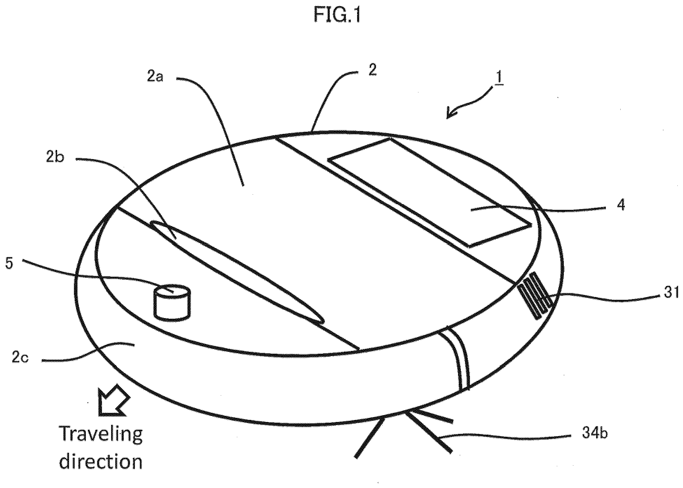

Fig. 1 is a perspective view illustrating the electronic apparatus 1 in accordance with First Embodiment. In the present specification, a forward direction is a travelling direction of the electronic apparatus 1 at a time when the electronic apparatus 1 propels itself and performs cleaning. This forward direction is indicated by an arrow in Fig. 1. On the other hand, a direction opposite to the traveling direction is defined as a backward direction.

The electronic apparatus 1 includes a housing 2 which is circular in a plan view. The housing 2 has an upper surface 2a that is provided with (i) an exhaust port 2b for exhausting air from which dust has been removed and (ii) a panel operation section 4 via which instructions are inputted to the electronic apparatus 1.

The panel operation section 4 includes an operation section via which instructions are inputted to the electronic apparatus 1, and a display section for displaying a variety of information. The operation section is provided with a plurality of operational buttons. A user can use an instruction input via the operation section and an instruction input with use of speech recognition in combination.

A forward portion of the upper surface 2a of the housing 2 is provided with a return signal receiving section 5 for receiving a return signal from a charging station. The electronic apparatus 1 is configured such that, when determining, for example, that cleaning of a floor is completed, the electronic apparatus 1 can autonomously return to the charging station by receiving the return signal via the return signal receiving section 5.

A side surface 2c of the housing 2 is divided into two portions one of which is a front portion and the other of which is a back portion. The front portion of the side surface 2c is slidable in forward and backward directions relative to the other portion of the housing 2, so that the front portion of the side surface 2c serves as a buffer when the electronic apparatus 1 collides with an obstacle.

Further, the side surface 2c of the housing 2 is provided with an audio output section 31. The audio output section 31 outputs sounds such as a voice and music. The audio output section 31 includes a speaker, for example. The audio output section 31 is an example of an asking-back section of the present invention. A bottom surface of the electronic apparatus 1 is provided with side brushes 34b in such a manner that the side brushes 34b protrude from the housing 2. The side brushes 34b will be detailed later.

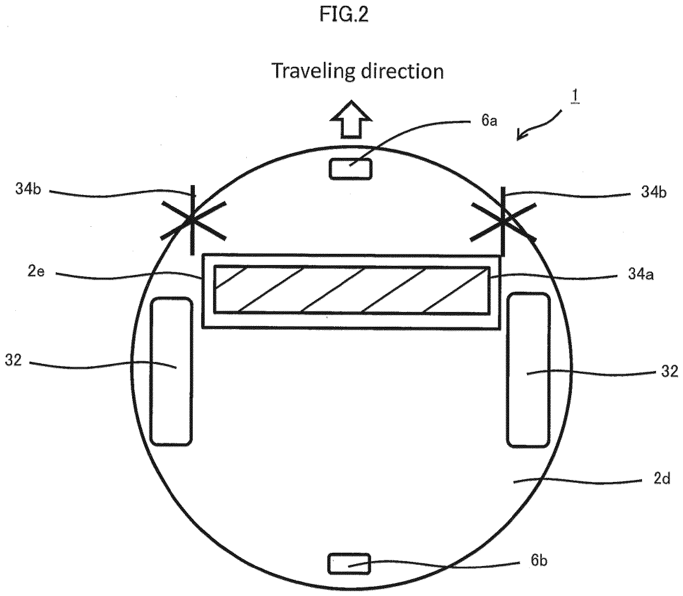

Fig. 2 is a bottom view illustrating the electronic apparatus 1. Also in Fig. 2, an arrow indicates a traveling direction of the electronic apparatus 1 at a time when the electronic apparatus 1 propels itself and performs cleaning. A bottom surface 2d of the housing 2 is provided with a suction port 2e for sucking dust on a floor, in such a manner that the suction port 2e is recessed from the bottom surface 2d. The bottom surface 2d of the housing 2 is further provided with a running section 32, a cleaning brush section 34, a front wheel 6a, and a back wheel 6b.

The running section 32 is a section with which the electronic apparatus 1 runs. The running section 32 includes, for example, driving wheels protruding from the bottom surface 2d, a motor for driving the driving wheels, etc. Fig. 2 illustrates, a part of the driving wheels in the running section 32 which part protrudes from the bottom surface 2d. The running section 32 is an example of a running section of the present invention.

The cleaning brush section 34 is a section for brushing and cleaning a floor. The cleaning brush section 34 includes, for example, a brush for cleaning a floor, a motor for driving the brush, and the like. Examples of the brush include (i) a rotating brush 34a which is provided at the suction port 2e so as to rotate around a rotation shaft supported in parallel with the floor, and (ii) the side brushes 34b which are positioned diagonally to the right and left, respectively, of a front of the bottom surface 2d so as to protrude from the housing 2 and to rotate around respective rotation shafts supported perpendicularly to the floor.

The front wheel 6a and the back wheel 6b are driven wheels which are driven by run of the running section 32.

The following discusses a configuration of the electronic apparatus 1. Components having been already described with reference to Fig. 1 or 2 are given the same reference signs as those in Fig. 1 or 2 and explanations thereof are omitted.

### (Configuration of electronic apparatus 1)

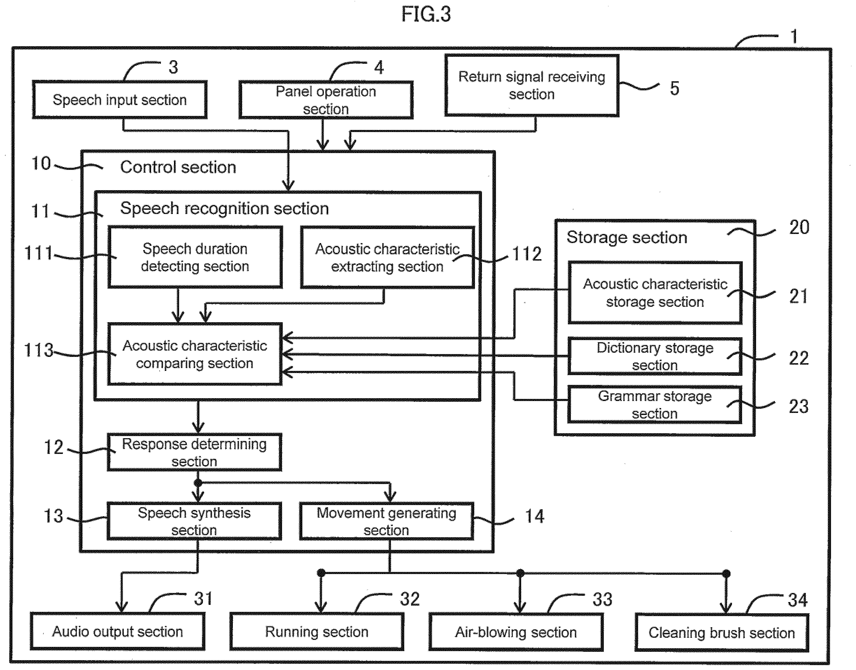

Fig. 3 is a block diagram illustrating a main configuration of the electronic apparatus 1. The electronic apparatus 1 includes a speech input section 3 and an air-blowing section 33.

The speech input section 3 is a section via which a speech is inputted and which converts thus inputted speech from analog to digital so as to generate speech data. The speech input section 3 includes, for example, a microphone etc. and an analog/digital converter etc. The microphone can be a directional microphone which particularly sensitively collects a sound from a predetermined direction or can be a non-directional microphone which collects a sound with a certain sensitivity regardless of a direction from which the sound comes. The speech input section 3 may be provided, for example, on a rear side of the upper surface 2a of the housing 2.

The air-blowing section 33 generates an air flow for sucking dust. Thus generated air flow is guided from the suction port 2e to a dust-collecting section (not illustrated). After the dust is removed from the air in the air-flow in the dust-collecting section, the air is exhausted out of the electronic apparatus 1 via the exhaust port 2b.

The electronic apparatus 1 further includes a storage section 20. The following discusses the storage section 20 in details.

### (Configuration of storage section 20)

The storage section 20 is a section in which various programs to be executed by a control section 10 described later, various data to be used and various data generated in execution of the programs, various data inputted to the electronic apparatus 1, and the like are stored. Examples of the storage section 20 includes nonvolatile storage devices such as a ROM (Read Only Memory), a flash memory, and an HDD (Hard Disc Drive) and volatile storage devices such as a RAM (Random Access Memory) for providing a working area.

The storage section 20 includes an acoustic characteristic storage section 21, a dictionary storage section 22, and a grammar storage section 23.

The acoustic characteristic storage section 21 is a section in which an acoustic characteristic of a speech to be recognized in speech recognition is stored. Kinds of the acoustic characteristic can be selected appropriately. Examples of the acoustic characteristic include a speech waveform and a frequency spectrum of a power of a speech. Though discussed later, the speech recognition section 11 recognizes a user's speech by comparing (a) an acoustic characteristic included in speech data generated by the speech input section 3 with (b) the acoustic characteristic stored in the acoustic characteristic storage section 21.

The dictionary storage section 22 is a section in which a dictionary is stored. In the dictionary, words to be recognized in speech recognition, phonological information regarding the words, etc. are registered.

The grammar storage section 23 is a section in which grammatical rules are stored. In the grammatical rules, how the words registered in the dictionary in the dictionary storage section 22 are chained is defined. The grammatical rules are based on, for example, a statistically obtained probability that words chains.

The electronic apparatus 1 further includes the control section 10. The following discusses the control section 10 in details.

### (Configuration of control section 10)

The control section 10 has overall control of individual sections of the electronic apparatus 1 in accordance with a program or data stored in the storage section 20. As a result of execution of the program, the speech recognition section 11, a response determining section 12, a speech synthesis section 13, and a movement generating section 14 are configured in the control section 10.

The speech recognition section 11 is a section for recognizing a user's speech in speech recognition. The speech recognition section 11 outputs, as a result of the speech recognition, information on a word or sentence included in speech data and a certainty of the word or sentence. The speech recognition section 11 includes a speech duration detecting section 111, an acoustic characteristic extracting section 112, and an acoustic characteristic comparing section 113. Note that the information on a word or sentence includes, for example, phonological information on the word or sentence.

The speech duration detecting section 111 is a section for detecting a start and an end of a speech to be recognized in speech recognition. In a case where no speech is detected, the speech duration detecting section 111 monitors whether or not a power of speech data generated by the speech input section 3 is not less than a predetermined threshold that is stored in the storage section 20. When the power of the speech data becomes not less than the threshold, the speech duration detecting section 111 determines that a speech is detected. When the power of the speech data becomes less than the threshold, the speech duration detecting section 111 determines that the speech is ended.

The acoustic characteristic extracting section 112 is a section for extracting, for each appropriate frame, an acoustic characteristic of speech data generated by the speech input section 3.

The acoustic characteristic comparing section 113 is a section for comparing (a) the acoustic characteristic extracted by the acoustic characteristic extracting section 112 with (b) the acoustic characteristic stored in the acoustic characteristic storage section 21 so as to (i) identify a word or sentence included in the speech data and (ii) calculate a certainty of thus identified word or sentence. The acoustic characteristic comparing section 113 can refer to, if necessary, the dictionary stored in the dictionary storage section 22 and/or the grammatical rules stored in the grammar storage section 23. The word or sentence identified by the acoustic characteristic comparing section 113 and information on the certainty of the identified word or sentence are supplied to the response determining section 12.

The following discusses a specific example of a process carried out by the acoustic characteristic comparing section 113. The acoustic characteristic comparing section 113 compares, for each frame extracted by the acoustic characteristic extracting section 112, an acoustic characteristic extracted from speech data with the acoustic characteristic stored in the acoustic characteristic storage section 21. Then, the acoustic characteristic comparing section 113 calculates a certainty of a word in relation to each of candidate words stored in the storage section 20, and specifies a word with the highest certainty. Furthermore, the acoustic characteristic comparing section 113 refers to the dictionary stored in the dictionary storage section 22 and obtains phonological information on the specified word.

In a case where the acoustic characteristic extracting section 112 extracts a plurality of frames, the acoustic characteristic comparing section 113 connects words specified in the respective frames as appropriate, so as to form sentences. The acoustic characteristic comparing section 113 calculates a certainty of each of thus formed sentences, and specifies a sentence with the highest certainty. Note that the acoustic characteristic comparing section 113 can calculate the certainty of each sentence, by referring to the grammatical rules stored in the grammar storage section 23.

The response determining section 12 is a section for determining a response of the electronic apparatus 1 in accordance with a result of speech recognition which result has been supplied from the speech recognition section 11. Specifically, the response determining section 12 determines a response of the electronic apparatus 12 in accordance with the certainty of the identified word or sentence. That is, in a case where the certainty of the identified word or sentence is so high as to leave no ambiguity about the result of speech recognition, the response determining section 12 determines that the electronic apparatus 1 is going to make a response corresponding to the identified word or sentence. In a case where the certainty of the identified word or sentence is at such a degree as to leave ambiguity about the result of speech recognition, the response determining section 12 determines that the electronic apparatus 1 is going to ask back to a user. In a case where certainty of the identified word or sentence is further lower, the response determining section 12 determines that the electronic apparatus 1 is going to neither make a response corresponding to the identified word or sentence nor ask back to the user.

The speech synthesis section 13 is a section for synthesizing speech data corresponding to the response determined by the response determining section 12. The speech synthesis section 13 outputs thus synthesized speech data to the audio output section 31. The speech synthesis section 13 can refer to, according to necessity, the dictionary stored in the dictionary storage section 22 and/or the grammatical rules stored in the grammar storage section 23.

The movement generating section 14 is a section for generating a movement pattern corresponding to the response determined by the response determining section 12. The movement generating section 14 outputs thus generated movement pattern to the running section 32, the air-blowing section 33, and/or the cleaning brush section 34.

The following discusses a flow of a process of speech recognition performed by the electronic apparatus 1 and an effect of the process.

### (Flow and effect of process)

A process below is carried out by execution of the program stored in the storage section 20. The program is executed by the control section 10 of the electronic apparatus 1.

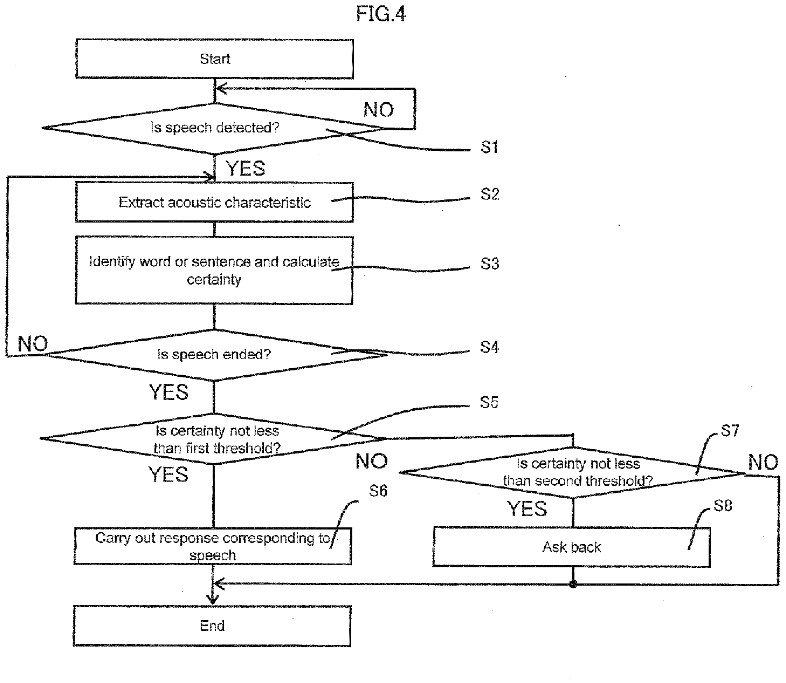

Fig. 4 is a flowchart illustrating the flow of the process of speech recognition performed by the electronic apparatus 1. In Fig. 4 and subsequently described flowcharts, "S" stands for "step". Also in the texts of the specification, "S" stands for "step".

First, the speech duration detecting section 111 monitors speech data supplied from the speech input section 3 and determines whether a speech to be recognized in speech recognition is detected or not (S1).

In a case where a speech is detected (YES in S1), the acoustic characteristic extracting section 112 extracts, for each appropriate frame, an acoustic characteristic of the speech data supplied from the speech input section 3 (S2). On the other hand, in a case where any speech is not detected (NO in S1), the speech duration detecting section 111 continues to monitor speech data supplied from the speech input section 3.

Next, the acoustic characteristic comparing section 113 compares the acoustic characteristic extracted by the acoustic characteristic extracting section 112 with the acoustic characteristic stored in the acoustic characteristic storage section 21 so as to (i) identify a word or sentence included in the speech data and (ii) calculate a certainty of thus identified word or sentence (S3).

The speech duration detecting section 111 monitors the speech data supplied from the speech input section 3, and determines whether or not the speech to be recognized in speech recognition is ended (S4). In a case where an end of the speech is not detected (NO in S4), the speech duration detecting section 111 continues to monitor the speech data supplied from the speech input section 3. Note here that in a case where the speech duration detecting section 111 detects a new speech, the speech recognition section 11 can output, to the response determining section 12, (a) a certainty calculated for a speech detected earlier, (b) a certainty calculated for a speech detected recently, or (c) both of a certainty calculated for a speech detected earlier and a certainty calculated for a speech detected recently.

In a case where an end of the speech is detected (YES in S4), the response determining section 12 determines whether the certainty of the word or sentence identified by the acoustic characteristic comparing section 113 is not less than a first threshold (S5). In a case where the certainty of the identified word or sentence is not less than the first threshold, the response determining section 12 determines that the electronic apparatus 1 is going to make a response corresponding to the recognized word or sentence. Then, such a response is made via the speech synthesis section 13 and the movement generating section 14 (S6).

In a case where the certainty of the word or sentence identified by the acoustic characteristic comparing section 113 is less than the first threshold (NO in S5), the response determining section 12 determines whether the certainty of the identified word or sentence is not less than a second threshold (S7). In a case where the certainty of the identified word or sentence is not less than the second threshold (YES in S7), the response determining section 12 determines that the electronic apparatus 1 is going to ask back to a user, and the electronic apparatus 1 asks back to the user via the speech synthesis section 13 and the movement generating section 14 (S8). On the other hand, in a case where the certainty of the identified word or sentence is less than the second threshold (NO in S7), the response determining section 12 determines that the electronic apparatus 1 is going to neither make the response corresponding to the identified word or sentence nor ask back to the user. Then, the response determining section 12 ends the process. Note that the second threshold is smaller than the first threshold.

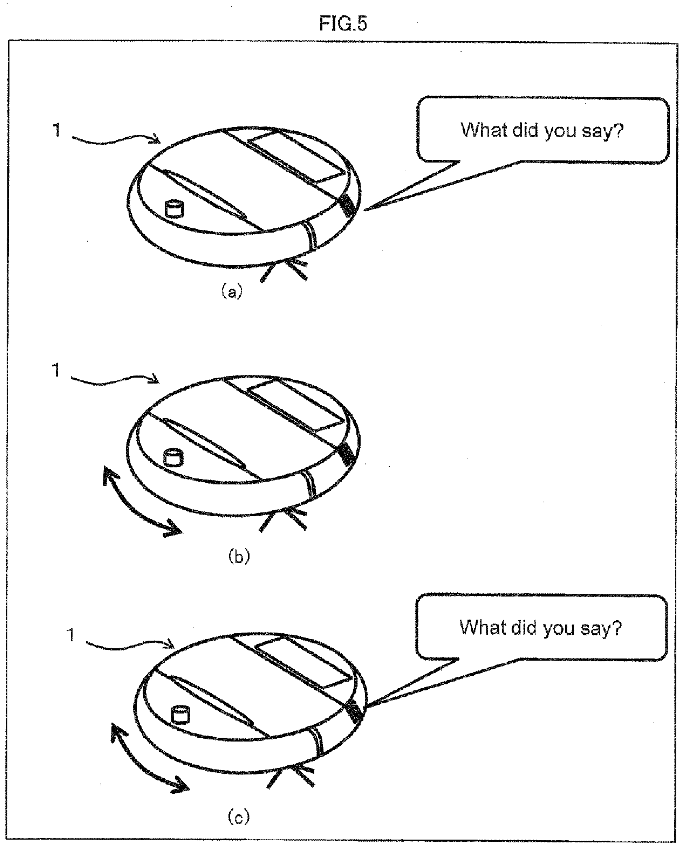

Fig. 5 is a schematic view illustrating a specific example in which the electronic apparatus 1 asks back to a user. (a) of Fig. 5 illustrates a case where the electronic apparatus 1 asks back to the user with a speech, (b) of Fig. 5 illustrates a case where the electronic apparatus 1 asks back to the user with a movement, and (c) of Fig. 5 illustrates a case where the electronic apparatus 1 asks back to the user both with a speech and a movement.

In the case where the electronic apparatus 1 asks back to the user with a speech, the speech synthesis section 13 synthesizes speech data corresponding to "what did you say?", and supplies the speech data to the audio output section 31. The audio output section 31 converts the supplied speech data from digital to analog so as to output "what did you say?" in a speech.

In the case where the electronic apparatus 1 asks back to the user with a movement, the movement generating section 14 (i) generates, for example, a movement pattern in which the electronic apparatus 1 rotates rightward and leftward with a predetermined angle on the spot, and (ii) controls the running section 32 so that the running section 32 runs in accordance with the movement pattern.

The electronic apparatus 1 configured as above asks back to a user in a case where the certainty of the word or sentence identified by the speech recognition section 11 is not more than the first threshold and not less than the second threshold. Accordingly, (a) in a case where the certainty of the word or sentence is ambiguous, the electronic apparatus 1 asks back to a user so as to avoid misrecognition, and (b) in a case where the certainty of the word or sentence is further lower, the electronic apparatus 1 does not ask back to a user so as to reduce an unnecessary asking-back response.

In regard to the electronic apparatus 1 in accordance with the present embodiment, the above description has dealt with a case where the electronic apparatus 1 asks back to a user once a word or sentence is recognized at a certainty in a predetermined range. However, the present invention is not limited to this case. For example, the electronic apparatus 1 can ask back to a user only when a word or sentence is recognized at a certainty in a predetermined range in speech recognition a plurality of times successively. The electronic apparatus 1 thus configured can further reduce an unnecessary asking-back response.

### [Second Embodiment]

The following discusses an electronic apparatus 1 in accordance with Second Embodiment of the present invention, with reference to the drawings. The electronic apparatus 1 in accordance with the present invention is different from the electronic apparatus 1 in accordance with First Embodiment of the present invention in that the electronic apparatus 1 of Second Embodiment asks back to a user differently depending on a certainty of a word or sentence that is recognized by the speech recognition section 11. Components in Second Embodiment which have been already described in First Embodiment are assumed to have the same functions as those in First Embodiment and explanations thereof are omitted unless particularly stated.

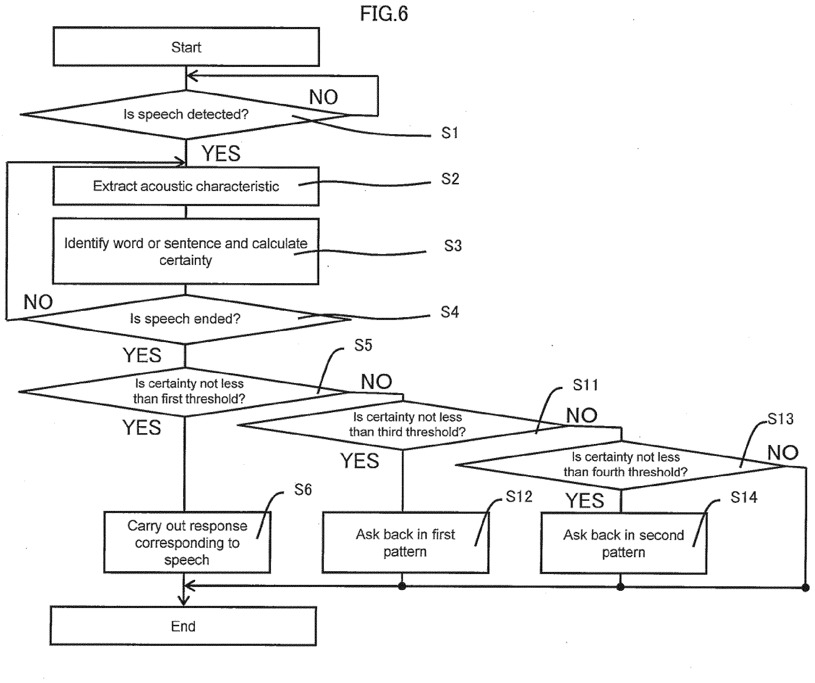

Fig. 6 is a flowchart illustrating a flow of a process of speech recognition performed by the electronic apparatus 1. Steps in Second Embodiment which have been already described in First Embodiment are assumed to have the same functions as those in First Embodiment and explanations thereof are omitted unless particularly stated.

In a case where a certainty of a word or sentence, which certainty is calculated by the speech recognition section 11, is less than a first threshold (NO in S5), the response determining section 12 determines whether the certainty of the word or sentence is not less than a third threshold (S11). In a case where the certainty of the word or sentence is not less than the third threshold (YES in S11), the response determining section 12 determines that the electronic apparatus 1 is going to ask back to a user in a first pattern. Then, such a response is made via the speech synthesis section 13 and the movement generating section 14 (S12). Note that the third threshold is smaller than the first threshold.

In a case where the certainty of the word or sentence, which certainty is calculated by the speech recognition section 11, is less than the third threshold (NO in S11), the response determining section 12 determines whether the certainty of the word or sentence is not less than a fourth threshold (S13). In a case where the certainty of the word or sentence is not less than the fourth threshold (YES in S13), the response determining section 12 determines that the electronic apparatus 1 is going to ask back to a user in a second pattern. Then, such a response is made via the speech synthesis section 13 and the movement generating section 14 (S14). Note that the fourth threshold is smaller than the third threshold.

In a case where the certainty of the word or sentence, which certainty is calculated by the speech recognition section 11, is less than the fourth threshold (NO in S13), the response determining section 12 determines that the electronic apparatus 1 is going to neither make a response corresponding to the recognized word or sentence nor ask back to a user. Then, the response determining section 12 ends the process.

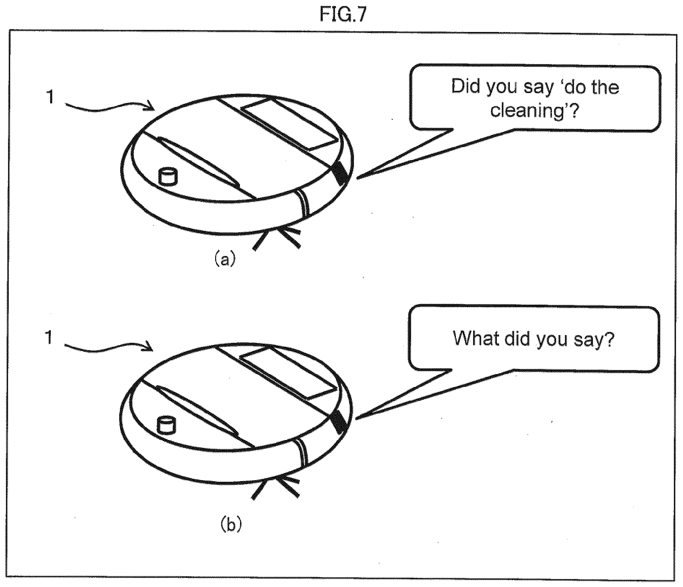

Fig. 7 is a schematic view illustrating a specific example in which the electronic apparatus 1 asks back to a user. (a) of Fig. 7 illustrates a case where the electronic apparatus 1 asks back to a user in a first pattern, and (b) of Fig. 7 illustrates a case where the electronic apparatus 1 asks back to a user in a second pattern.

In the case of asking back to a user in the first pattern, the speech synthesis section 13 synthesizes speech data corresponding to, for example, "did you say 'do the cleaning'?", and supplies thus synthesized speech data to the audio output section 31. The audio output section 31 converts the supplied speech data from digital to analog so as to output "did you say 'do the cleaning'?" in a speech.

In the present embodiment, a speech for asking back to a user in the first pattern is synthesized based on a word or sentence with the highest certainty which is specified by the speech recognition section 11. For example, in a case where the sentence with the highest certainty is "do the cleaning", the response determining section 12 determines that the electronic apparatus 1 is going to ask back to a user "did you say 'do the cleaning'?".

In the case of asking back to a user in the second pattern, the speech synthesis section 13 generates speech data corresponding to "what did you say?", and supplies thus synthesized speech data to the audio output section 31. The audio output section 31 converts the supplied speech data from digital to analog and outputs "what did you say?" in a speech.

The electronic apparatus 1 configured as above asks back to a user differently depending on a certainty of a word or sentence recognized by the speech recognition section 11. Consequently, the user can know a level of recognition of the electronic apparatus 1 as to a user's speech, from a speech and/or a movement that is made when the electronic apparatus 1 asks back to the user. This allows the user to, for example, select whether to make an instruction input again with a speech or via the panel operation section 4, or the like. This improves user's convenience.

### [Third Embodiment]

The following discusses an electronic apparatus 1a in accordance with Third Embodiment of the present invention, with reference to the drawings. The electronic apparatus 1a of the present invention is different from those of First and Second Embodiments in that (i) the electronic apparatus 1a includes a communication section 6 via which the electronic apparatus 1a communicates with an external device 200, and (ii) the electronic apparatus 1a communicates with the external device 200 so as to cause a speech recognition process on a user's speech to be performed also on the external device 200. Components in Third Embodiment which have been already described in First Embodiment are assumed to have the same functions as those in First Embodiment and explanations thereof are omitted unless particularly stated.

### (Configurations of electronic apparatus 1a and external device 200)

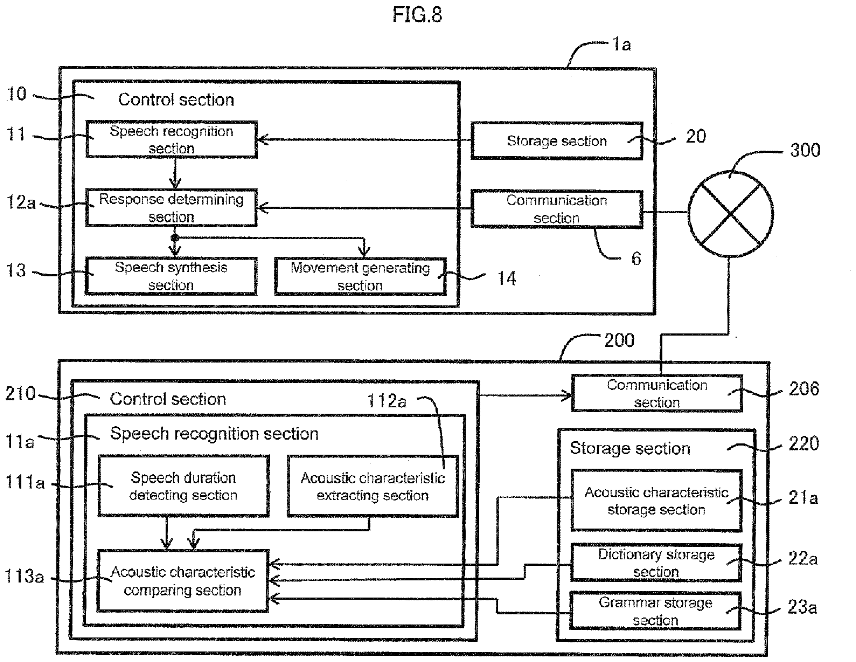

Fig. 8 is a block diagram illustrating main configurations of the electronic apparatus 1a and the external device 200. The electronic apparatus 1a further includes the communication section 6 in addition to the components described in First Embodiment. Fig. 8 illustrates only a part of the components described in First Embodiment.

The communication section 6 transmits/receives information to/from the external device 200. The communication section 6 is connected to a communication network 300, and is connected to the external device 200 via the communication network 300.

The communication network 300 is not limited, and can be selected appropriately. The communication network 300 can be, for example, the Internet. The communication network 300 can employ wireless connections such as IrDA and remote control using infrared ray, Bluetooth®, WiFi®, IEEE802.11, or the like.

A response determining section 12a is a section for determining a response of the electronic apparatus 1a in accordance with (i) a result of speech recognition which result has been supplied from the speech recognition section 11 and (ii) a result of speech recognition which result has been received from a speech recognition section 11a (described later) of the external device 200.

The external device 200 includes a communication section 206, a storage section 220, and a control section 210. The communication section 206 transmits/receives information to/from the electronic apparatus 1a. The communication section 206 is connected to the communication network 300, and is connected to the electronic apparatus 1a via the communication network 300.

The storage section 220 is a section in which various programs to be executed by the control section 210 (described later), various data to be used and various data generated in execution of the programs, various data inputted to the external device 200, and the like are stored. The storage section 220 includes a nonvolatile storage device such as a ROM, a flash memory, and an HDD and a volatile storage device such as a RAM for providing a working area.

The storage section 220 includes an acoustic characteristic storage section 21 a, a dictionary storage section 22a, and a grammar storage section 23a. The acoustic characteristic storage section 21a is a section in which data similar to that stored in the aforementioned acoustic characteristic storage section 21 is stored. The dictionary storage section 22a is a section in which data similar to that stored in the aforementioned dictionary storage section 22 is stored. The grammar storage section 23a is a section in which data similar to that stored in the grammar storage section 23 is stored.

The control section 210 has overall control of individual sections of the external device 200 in accordance with a program or data stored in the storage section 220. As a result of execution of the program, the speech recognition section 11a is configured in the control section 210.

The speech recognition section 11a includes a speech duration detecting section 111a, an acoustic characteristic extracting section 112a, and an acoustic characteristic comparing section 113a. The speech duration detecting section 111a has a function similar to that of the aforementioned speech duration detecting section 111. The acoustic characteristic extracting section 112a has a function similar to that of the aforementioned acoustic characteristic extracting section 112. The acoustic characteristic comparing section 113a has a function similar to that of the aforementioned acoustic characteristic comparing section 113.

The following discusses a flow of a process of speech recognition performed by the electronic apparatus 1a and an effect of the process.

### (Flow and effect of process)

A process below is carried out by execution of a program stored in a storage section 20. The program is executed by a control section 10 of the electronic apparatus 1a.

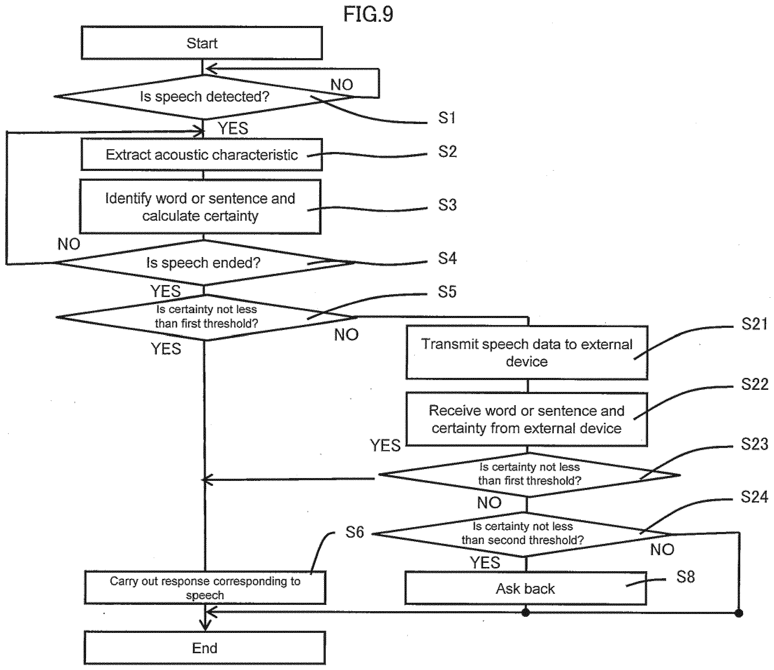

Fig. 9 is a flowchart illustrating the flow of the process of speech recognition performed by the electronic apparatus 1a. Steps in Third Embodiment which have been already described in First Embodiment are assumed to have the same functions as those in First Embodiment and explanations thereof are omitted unless particularly stated.

In a case where a certainty of a word or sentence is calculated by the speech recognition section 11a and this certainty is less than a first threshold (NO in S5), the control section 10 transmits, to the external device 200 via the communication section 6, speech data supplied from the speech input section 3 (S21).

In the external device 200, the speech recognition section 11a performs speech recognition in ways similar to S2 and S3 illustrated in Figs. 4 and 6, thereby identifying a word or sentence included in the speech data and calculating a certainty of thus identified word or sentence. Then, the control section 210 transmits, to the electronic apparatus 1a via the communication section 206, (i) information on the identified word or sentence and (ii) the certainty of the identified word or sentence. The electronic apparatus 1a receives the information from the external device 200 (S22).

The response determining section 12a having received the certainty of the word or sentence from the external device determines whether this certainty of the word or sentence is not less than the first threshold (S23). In a case where the certainty of the word or sentence is not less than the first threshold (YES in S23), the response determining section 12a determines that the electronic apparatus 1a is going to make a response corresponding to the word or sentence recognized in speech recognition. Then, such a response is made via the speech synthesis section 13 and the movement generating section 14 (S6).

In a case where the certainty of the word or sentence has been received from the external device 200 and this certainty is less than the first threshold (NO in S23), the response determining section 12a determines whether the certainty of the word or sentence is not less than the second threshold (S24). In a case where the certainty of the word or sentence is not less than the second threshold (YES in S24), the response determining section 12a determines that the electronic apparatus 1a is going to ask back to a user. Then, such a response is made via the speech synthesis section 13 and the movement generating section 14 (S8). On the other hand, in a case where the certainty of the word or sentence is less than the second threshold (NO in S24), the response determining section 12a determines that the electronic apparatus 1a is going to neither make a response corresponding to the recognized word or sentence nor ask back to a user. Then the response determining section 12a ends the process.

In a case where a certainty of a word or sentence is calculated in the electronic apparatus 1a configured as above and this certainty is not more than the first threshold, the electronic apparatus 1a (i) receives information on a certainty of the word or sentence which certainty is calculated in the external device 200, and (ii) at the same time, determines again whether the certainty of the word or sentence is not more than the first threshold in accordance with the received information. Consequently, in a case where a result of speech recognition performed by the electronic apparatus 1a has ambiguity, the electronic apparatus 1a performs speech recognition again with use of the external device 200 without immediately asking back to a user. This allows reducing an unnecessary asking back response.

The external device 200 can have a larger number of pieces of data in regard to acoustic characteristics, a dictionary, and/or grammatical rules stored in the storage section 220 than those stored in the electronic apparatus 1a. In this case, it is possible to improve accuracy in speech recognition, as compared to a case where speech recognition is performed only by the electronic apparatus 1a.

### [Other embodiments]

The above embodiments have discussed a case where when a certainty of a word or sentence identified by the speech recognition section 11 is within a predetermined range, the electronic apparatus 1 asks back to a user. Alternatively, the present invention can be arranged such that even in a case where a certainty of an identified word or sentence is within a predetermined range, the electronic apparatus 1 does not ask back to a user when a predetermined condition is met.

When the predetermined condition is met means, for example, when the electronic apparatus 1 drives the running section 32, the air-blowing section 33, and/or the cleaning brush section 34. When the electronic apparatus 1 drives the running section 32, the air-blowing section 33, and/or the cleaning brush section 34, a noise is generated by the running section 32, the air-blowing section 33, and/or the cleaning brush section 34, which deteriorates accuracy in speech recognition. Accordingly, the electronic apparatus 1 can be configured so as not to ask back to a user in such a case, in order to avoid an unnecessary asking-back response.

Another example of when the predetermined condition is met is when it is a predetermined time zone such as nighttime. By configuring the electronic apparatus 1 not to ask back to a user in a predetermined time zone such as nighttime, it is possible to prevent a user from feeling that being asked back by the electronic apparatus 1 is troublesome.

The above embodiments have discussed a case where (i) the electronic apparatus 1 compares a certainty of a word or sentence identified by the speech recognition section 11 with predetermined first through fourth thresholds and (ii) thereby, the electronic apparatus 1 determines whether it is necessary to ask back to a user not. Alternatively, the electronic apparatus 1 can be configured such that the first through fourth thresholds are changed in accordance with a condition under which speech recognition is performed, an identified word or sentence, or the like.

The electronic apparatus 1 can be configured such that, for example, in a case where the electronic apparatus 1 drives the running section 32, the air-blowing section 33, and/or the cleaning brush section 34, the second threshold is set to be lower or higher than that in a case where the electronic apparatus 1 does not drive the running section 32, the air-blowing section 33, and/or the cleaning brush section 34. Whether the second threshold is set to be lower or higher may be appropriately selected depending on the type of the electronic apparatus 1, an environment in which the electronic apparatus 1 is used, or the like.

While the running section 32, the air-blowing section 33, and/or the cleaning brush section 34 is driven, a noise is generated due to such driving and the noise deteriorates a certainty of a word or sentence which certainty is calculated in the electronic apparatus 1. Even in such a case, the electronic apparatus 1 can ask back to a user when the second threshold is set to be lower.

While the running section 32, the air-blowing section 33, and/or the cleaning brush section 34 is driven, a noise is generated due to such driving and the noise deteriorates accuracy in speech recognition. When the second threshold is set to be higher in this case, the electronic apparatus 1 determines, with reference to a higher threshold, whether it is necessary to ask back to a user or not. This allows reducing an unnecessarily asking-back response.

Further, the electronic apparatus 1 can be configured such that, for example, in a case where an identified word or sentence indicates a matter involving an operation of the electronic apparatus 1, the first threshold is set to be higher than that in a case where the identified word or sentence does not indicate a matter involving an operation of the electronic apparatus 1. Configuring the electronic apparatus 1 as above allows preventing misrecognition of a speech instruction associated with an operation which speech instruction particularly requires avoidance of misrecognition.

The above embodiment has discussed a case where the electronic apparatus 1a receives, via the communication section 6, information regarding (i) a word or sentence identified in the external device 200 and (ii) a certainty of the word or sentence. However, the present invention is not limited to this case.

For example, the electronic apparatus 1a can be configured to receive, from the external device 200, information regarding an acoustic characteristic, a dictionary, and/or grammatical rules to be referred to in a speech recognition process. Configuring the electronic apparatus 1a as above allows increasing the number of words or sentences which the electronic apparatus 1a can recognize in a speech.

Furthermore, for example, the electronic apparatus 1a can be configured to receive, from the external device 200, audio data corresponding to a sound to be outputted from the audio output section 31. Configuring the electronic apparatus 1a as above allows changing the sound to be outputted from the audio output section 31.

The information to be received by the electronic apparatus 1a can be generated by a user with use of the external device 200. Specifically, the user accesses the external device 200 via a terminal device such as a smart phone so as to instruct the external device 200 to generate information on a desired dictionary, audio data, etc. The control section 210 of the external device 200 generates the information based on a program or data stored in the storage section 220. In a case where the user generates desired audio data, the user can use various existing sound data such as audio data which the user recorded, audio data obtained via the Internet, and music data such as a music CD.

Thus generated information can be supplied to the electronic apparatus 1 by providing the electronic apparatus 1 with a storage medium in which the information is stored. The storage medium is not particularly limited. The storage medium is, for example, tapes such as a magnetic tape, magnetic discs such as an HDD, optical discs such as a CD-ROM, cards such as an IC card, semiconductor memories such as a flash ROM, and logical circuits such as a PLD (Programmable logic device).

The above embodiments have discussed a case where the electronic apparatus is a cleaner. However, the present invention is not limited to this case. The electronic apparatus can be AVC devices such as TVs and PCs (Personal Computers), and electrical household appliances such as electronic cooking devices and air conditioners.

As described above, an electronic apparatus of the present invention is an electronic apparatus, including: a speech input section for converting an inputted speech to speech data; a speech recognition section for analyzing the speech data so as to (i) identify a word or sentence included in the speech data and (ii) calculate a certainty of the word or sentence that has been identified; a response determining section for determining, in accordance with the certainty, whether it is necessary to ask back to a user or not; and an asking-back section for asking back to the user, in a case where the certainty is less than a first threshold and not less than a second threshold, the response determining section determining that the electronic apparatus is going to ask back to the user, and in a case where the certainty is less than the second threshold, the response determining section determining that the electronic apparatus is not going to ask back to the user.

By arranging the electronic apparatus as above, (a) in a case where a certainty of a word or sentence is ambiguous, the electronic apparatus asks back to a user so as to avoid misrecognition, and (b) in a case where the certainty of the word or sentence is further lower, the electronic apparatus does not ask back to a user. This allows reducing an unnecessary asking back response.

The electronic apparatus may be arranged such that the response determining section selects, in accordance with the certainty, one of a plurality of patterns in which the asking-back section asks back to the user.

By arranging the electronic apparatus as above, the user can know a level of recognition of the electronic apparatus as to a user's speech, from a speech and/or a movement with which the electronic apparatus asks back to the user. This allows the user to, for example, select whether to make an instruction input again with a speech, via a panel operation section, or the like. This improves user's convenience.

The electronic apparatus may be arranged so as to further include a communication section for transmitting the speech data to an external device and receiving, from the external device, a certainty of a word or sentence included in the speech data.

By arranging the electronic apparatus as above, in a case where a result of speech recognition performed by the electronic apparatus has ambiguity, the electronic apparatus performs speech recognition again with use of the external device without immediately asking back to a user. This allows reducing an unnecessary asking-back response.

The electronic apparatus can be arranged such that the asking-back section asks back to a user with a predetermined speech and/or a predetermined movement.

A cleaner may include: one of the aforementioned electronic apparatuses; and at least one of a self-propelling section with which the electronic apparatus propels itself, an air-blowing section for sucking dust, and a cleaning brush section for brushing and cleaning a floor.

The cleaner is often used under a noisy condition due to driving of the self-propelling section, the air-blowing section, and/or the cleaning brush section, and the like. By arranging the cleaner as above, (a) in a case where a certainty of a word or sentence is ambiguous, the cleaner asks back to a user so as to avoid misrecognition, and (b) in a case where the certainty of the word or sentence is further lower, the cleaner does not ask back to the user. This makes it possible to reduce an unnecessary asking-back response.

The cleaner may be arranged such that the response determining section changes the second threshold while at least one of the self-propelling section, the air-blowing section, and the cleaning brush section is being driven.

By arranging the cleaner as above, the cleaner determines whether it is necessary to ask back to a user or not, by comparing the certainty with the second threshold that has been changed in accordance with the noisy condition. Accordingly, the cleaner can ask back to the user more appropriately even under the noisy condition.

The embodiments disclosed herein are in any point only examples and should not be considered to limit the present invention. The scope of the present invention is presented not in the above description but in the patent claims set forth below. The scope of the present invention is intended to encompass all modifications within the scope and equivalents in meaning of the patent claims set forth below.

### Industrial Applicability

The electronic apparatus of the present invention is widely applicable to, for example, an electronic apparatus including a speech recognition section.

### Reference Signs List

- 1, 1a: Electronic apparatus
- 2: Housing
- 2a: Upper surface
- 2b: Exhaust port
- 2c: Side surface
- 2d: Bottom surface
- 2e: Suction port
- 3: Speech input section
- 6: Communication section
- 10: Control section
- 11, 11a: Speech recognition section
- 111, 111a: Speech duration detecting section
- 112, 112a: Acoustic characteristic extracting section
- 113, 113a: Acoustic characteristic comparing section
- 12: Response determining section
- 13: Audio output section
- 14: Movement generating section
- 20: Storage section
- 21, 21a: Acoustic characteristic storage section
- 22, 22a: Dictionary storage section
- 23, 23a: Grammar storage section
- 31: Audio output section
- 32: Running section
- 33: Air-blowing section
- 34: Cleaning brush section
- 200: External device
- 206: Communication section
- 210: Control section
- 220: Storage section

## Claims

1. A cleaner comprising:
a speech input section for converting an inputted speech to speech data;
a speech recognition section for analyzing the speech data so as to (i) identify a word or sentence included in the speech data and (ii) calculate a certainty of the word or sentence that has been identified;
a response determining section for determining, in accordance with the certainty, whether it is necessary to ask back to a user or not;
an asking-back section for asking back to the user,
(a) in a case where the certainty is less than a first threshold and not less than a second threshold, the response determining section determining that the cleaner is going to ask back to the user, and
(b) in a case where the certainty is less than the second threshold, the response determining section determining that the cleaner is not going to ask back to the user; and
at least one of a self-propelling section with which the cleaner propels itself, an air-blowing section for sucking dust, and a cleaning brush section for brushing and cleaning a floor,
wherein the response determining section changes the second threshold while at least one of the self-propelling section, the air-blowing section, the cleaning brush section is being driven.

2. The cleaner as set forth in claim 1, wherein the response determining section selects, in accordance with the certainty, one of a plurality of patterns in which the asking-back section asks back to the user.

3. The cleaner as set forth in claim 1 or 2, further comprising a communication section for transmitting the speech data to an external device and receiving, from the external device, a certainty of a word or sentence included in the speech data.

## Patentansprüche

1. Reiniger, der Folgendes umfasst:
einen Spracheingabeteil zum Umwandeln von eingegebener Sprache in Sprachdaten;
einen Spracherkennungsteil zum Analysieren der Sprachdaten, um (i) ein(en) in den Sprachdaten enthaltenes/n Wort oder Satz zu identifizieren, und (ii) eine Gewissheit des identifizierten Wortes oder Satzes zu berechnen;
einen Antwortbestimmungsteil zum Bestimmen, gemäß der Gewissheit, ob es nötig ist, beim Benutzer zurückzufragen oder nicht;
einen Rückfrageteil zum Zurückfragen beim Benutzer,
(a) wobei der Antwortbestimmungsabschnitt in einem Fall, in dem die Gewissheit geringer ist als eine erste Schwelle und nicht geringer ist als eine zweite Schwelle, bestimmt, dass der Reiniger beim Benutzer zurückfragt, und
(b) in einem Fall, in dem die Gewissheit geringer ist als die zweite Schwelle, der Antwortbestimmungsteil bestimmt, dass der Reiniger nicht beim Benutzer zurückfragt; und
wenigstens eines aus einem Selbstantriebsteil, mit dem der Reiniger sich selbst antreibt, einem Luftgebläseteil zum Staubsaugen und einem Reinigungsbürstenteil zum Bürsten und Reinigen eines Fußbodens,
wobei der Antwortbestimmungsteil die zweite Schwelle ändert, während wenigstens eines aus dem Selbstantriebsteil, dem Luftgebläseteil, dem Reinigungsbürstenteil angetrieben wird.

2. Reiniger nach Anspruch 1, wobei der Antwortbestimmungsteil gemäß der Gewissheit eines von mehreren Mustern auswählt, in denen der Rückfrageteil beim Benutzer zurückfragt.

3. Reiniger nach Anspruch 1 oder 2, der ferner einen Kommunikationsteil zum Übertragen der Sprachdaten zu einem externen Gerät und zum Empfangen, von dem externen Gerät, einer Gewissheit eines in den Sprachdaten enthaltenen Wortes oder Satzes umfasst.

## Revendications

1. Un dispositif de nettoyage comprenant :
une section d'entrée vocale destinée à la conversion d'un signal vocal en entrée en données vocales,
une section de reconnaissance vocale destinée à l'analyse des données vocales de façon à (i) identifier un mot ou une phrase inclus dans les données vocales et (ii) calculer une certitude du mot ou de la phrase qui a été identifié,
une section de détermination de réponse destinée à déterminer, en fonction de la certitude, s'il est nécessaire de relancer un utilisateur ou non,
une section de relance destinée à la relance de l'utilisateur,
(a) dans le cas où la certitude est inférieure à un premier seuil et non inférieure à un deuxième seuil, la section de détermination de réponse déterminant que le dispositif de nettoyage va relancer l'utilisateur, et
(b) dans le cas où la certitude est inférieure au deuxième seuil, la section de détermination de réponse déterminant que le dispositif de nettoyage ne va pas relancer l'utilisateur, et
au moins une section parmi une section d'auto-propulsion avec laquelle le dispositif de nettoyage s'auto-propulse, une section de soufflage d'air destinée à l'aspiration de poussière et une section de brosse de nettoyage destinée au brossage et au nettoyage d'un sol,
où la section de détermination de réponse modifie le deuxième seuil pendant qu'au moins une section parmi la section d'auto-propulsion, la section de soufflage d'air, la section de brosse de nettoyage est entraînée.

2. Le dispositif de nettoyage selon la Revendication 1, où la section de détermination de réponse sélectionne, en fonction de la certitude, un modèle d'une pluralité de modèles selon lequel la section de relance relance l'utilisateur.

3. Le dispositif de nettoyage selon la Revendication 1 ou 2, comprenant en outre une section de communication destinée à la transmission des données vocales vers un dispositif externe et à la réception, à partir du dispositif externe, d'une certitude d'un mot ou d'une phrase inclus dans les données vocales.
